# EUROPEAN PATENT APPLICATION

(11) **EP 1 564 686 A1**
(43) Date of publication of application: **17.08.2005**
(21) Application number: 03715662.7
(22) Date of filing: 31.03.2003
(51) Int. Cl.: G06T 7/00, H04L 9/32

(54) **COLLATOR AND REGISTER**

(71) Applicant: FUJITSU LIMITED, Kawasaki-shi, Kanagawa 211-8588 (JP)
(72) Inventor: Fukuda, Mitsuaki, c/o Fujitsu Limited, Kawasaki-shi, Kanagawa 211-8588 (JP); Endoh, Toshio, c/o Fujitsu Limited, Kawasaki-shi, Kanagawa 211-8588 (JP); Watanabe, Masaki, c/o Fujitsu Limited, Kawasaki-shi, Kanagawa 211-8588 (JP)
(74) Representative: Hitching, Peter Matthew
(86) International application number: PCT/JP2003/004096
(87) International publication number: WO 2004/088591

(57) **Abstract**

The present invention provides a collator capable of enhancing security, high speed collation processing and reducing the load on communication path for transmitting information for confirming a person or persons. A collator 2 comprises a detachable and portable storage media 3 and is connected with a server 4 by way of a network, wherein the problems are solved by collating information for confirming a person acquired by a multimedia information acquisition unit 21 stepwise, in collation processing stages P1, P2 and P3, with respective collation information for confirming a person prestored divisionally in a plurality of storage units 23, 31 and 41.

## Description

### Technical Field

The present invention relates to a collator for collating submitted personal information with stored information in a storage apparatus in advance for confirming a person or persons.

### Background Art

Collating techniques have been in development utilizing information for confirming a person, that is, multimedia information belonging to the person in an attempt to protect security and improve convenience of the user in diverse aspects of the information society.

For collation processing by using multimedia information, an identification collation is performed by registering multimedia information belonging to persons in a storage apparatus in advance, acquiring multimedia information belonging to a person as a subj ect of collation ("collation subject" hereinafter) at the time of such a need arising, and comparing with the registered multimedia information.

In conventional techniques, personal multimedia information required for such collation is collectively stored in one storage apparatus. There is also a technique to store multimedia information used for such collation in a portable storage unit and a collation storage unit divisionally, merge the divisionally stored data at the time of collation, and collate the submitted personal multimedia information with the merged data (e.g., patent document 1).

### [Patent document 1] Japanese patent laid-open application publication 2001-67137

The conventional technique, however, has been faced with a risk of such multimedia information prestored in a storage apparatus being stolen in which event a third party person can pass a collation processing by taking on the position of another person. There is also irreplaceable information among the multimedia information belonging to a person and therefore a resultant damage is sometimes irreparable once stolen.

Meanwhile, the patent document 1 divides multimedia information belonging to a person into two parts by division ratio M and stores the divided information in different storage apparatuses. The patent document 1 offers a technique to store the divided information in two storage places only and limit the storage method such as a portable storage media on one hand and a storage apparatus equipped within a collator on the other. Furthermore, the technique requires merging the divided information at the time of using the divided information, hence consuming an extraneous time before a collation processing.

Meanwhile, a high precision collation needs to accompany a high processing speed. In particular, a 1:N collation for selecting a person from among many registrants consumes time in collation processing for collating with the multimedia information belonging to all the registrants. With an increased amount of multimedia information required for such a collation, the data transmission volume in the information transmission path of a server-client type system configuration becomes large, hence imposing a heavy load on the network.

In consideration of the above described problems, the present invention provides an improvement of security, a high speed collation processing and a collator capable of alleviating load on the communication path for transmitting information for confirming a person or persons.

### Disclosure of Invention

The above mentioned problems are solved by providing a collator, comprising at least one of a plurality of storage units divisionally storing personal information for confirming a person; an acquisition unit for acquiring personal information of a confirmation subject which is personal information belonging to the confirmation subject; and a collation unit for collating personal information of a confirmation subject acquired by the acquisition unit with the stored divided personal information acquired at a first storage unit from among the plurality of storage units, judging whether or not the next stage of collation will be performed based on the collation result and collating in the next stage by using the personal information acquired at a second storage unit from among the plurality of storage units, if the judgment calls for the next stage of collation.

Such a configuration, that is, by repeating collation stepwise with divisionally stored personal information for confirming a person in respective storage units, makes it difficult to restore pre-divided information for confirming a person from the divided information therefor.

The above problem is also successfully challenged by providing a collator wherein the collation unit collates a characteristic of personal information of a confirmation subject acquired by the acquisition unit with a characteristic of the stored divided personal information acquired at a first storage unit from among the plurality of storage units and sets a degree of similarity for indicating a degree of accord in the characteristic.

Such a configuration enables a judgment as to whether or not a collation processing in the next stage is called for based on the degree of similarity, and therefore the average time required for collation processing for confirming a person to be shorter than the conventional method.

Meanwhile, the above mentioned problem is also validly challenged by providing a register comprising an acquisition unit for acquiring personal information for confirming a person; a division unit for dividing the personal information; and a storage control unit for storing divided personal information, which is the personal information divided into a plurality thereof by the division unit, respectively in the plurality of storage units equipped in the collator.

Such a configuration enables information for confirming a person to be stored separately in storage units, hence diversifying a risk associated with the storage apparatus being stolen for instance.

Furthermore the above mentioned problem is also effectively challenged by providing a register wherein the division unit divides the personal information stepwise ranging from divided personal information having a large volume of information to divided personal information having a small volume thereof and the storage control unit stores the divided personal information in the respectively different storage units.

Such a configuration enables the average time required for collation processing for confirming a person to be shorter than the conventional method, while taking the load off a network.

Furthermore the above mentioned problem is also sufficiently challenged by providing a register further comprising an encryption unit for encrypting divided personal information divided by the division unit and stored in the storage unit.

Such a configuration encrypting the divisionally stored multimedia information enhances the security.

### Brief Description of Drawings

The present invention will be more apparent from the following detailed description when the accompanying drawings are referenced to.
Fig. 1 illustrates a collator according to a first embodiment;
Fig. 2 shows a detailed flow chart (example 1) of a collation processing by a multimedia information collation unit according to the first embodiment;
Fig. 3 shows an example of using leaf veins of a plant as an example of multimedia information according to the first embodiment;
Fig. 4 shows a detailed flow chart (example 2) of a collation processing by the multimedia information collation unit according to the first embodiment;
Fig. 5 illustrates a register according to a second embodiment;
Fig. 6 illustrates how three-part division of multimedia information divided by a multimedia information division unit is stored in respective storage units according to the second embodiment;
Fig. 7 shows a concept for division and combination according to a third embodiment;
Fig. 8 illustrates a collator according to the third embodiment;
Fig. 9 illustrates a collator according to a fourth embodiment;
Fig. 10 illustrates a collator according to a fifth embodiment;
Fig. 11 illustrates a register according to a sixth embodiment;
Fig. 12 illustrates a collator according to the sixth embodiment;
Fig. 13 shows a flow chart of encryption according to the sixth embodiment;
Fig. 14 shows a flow chart of decryption according to the sixth embodiment;
Fig. 15 shows a flow chart of encryption according to a seventh embodiment;
Fig. 16 shows a flow chart of decryption according to the seventh embodiment;
Fig. 17 shows a flow chart (example 1) of encryption according to an eighth embodiment;
Fig. 18 shows a flow chart (example 1) of decryption according to the eighth embodiment;
Fig. 19 shows a flow chart (example 2) of encryption according to the eighth embodiment;
Fig. 20 shows a flow chart (example 2) of decryption according to the eighth embodiment;
Fig. 21 shows how divided multimedia information belonging to a plurality of persons is combined through combination according to a ninth embodiment;
Fig. 22 illustrates a collator according to the ninth embodiment;
Fig. 23 shows an example of how to store information in respective storage units when the number of persons whose information subject to store is/are changed, according to a tenth embodiment;
Fig. 24 illustrates processing as to which storage unit the information is to be drawn from at the time of performing collation according to the tenth embodiment; and
Fig. 25 is a structural block diagram of hardware environment according to the present invention.

### Best Mode for Carrying Out the Invention

### [First Embodiment]

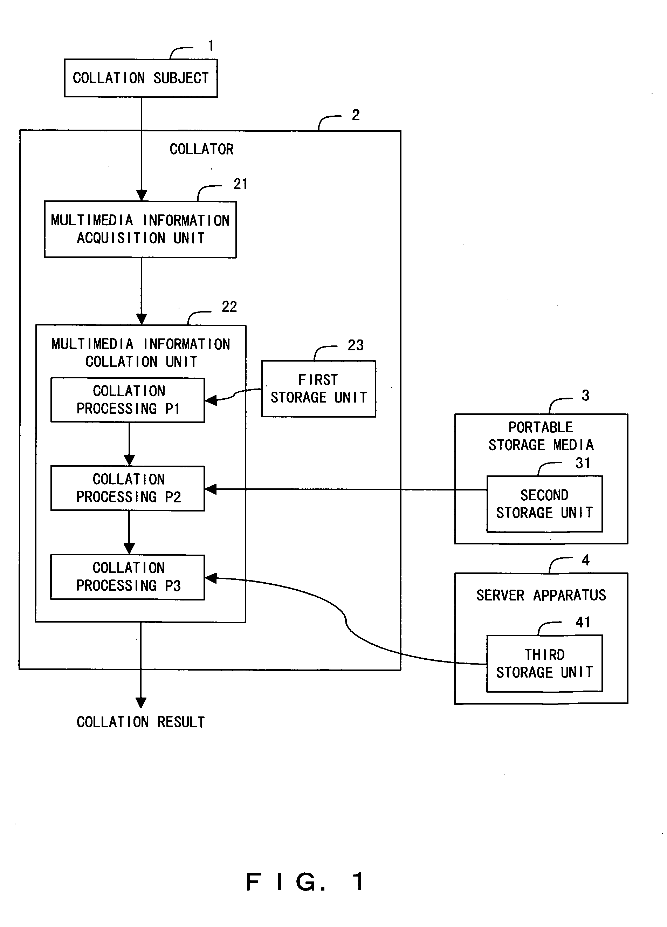

Fig. 1 illustrates a collator system according to the present embodiment. Although the present embodiment shows an example of storing multimedia information belonging to a person in three separately located storage units divisionally, the number of storage units is not limited as such.

In Fig. 1, a storage apparatuses storing multimedia information are distributedly located in a hard disk (i.e., first storage apparatus 23) being equipped in a personnel collator 2, a portable storage media (i.e., portable storage media 3 comprising a second storage unit 31) 3 such as a common memory card, a security-protected IC card, et cetera, and a storage apparatus (i.e., third storage unit 41) equipped in a server 4 which is connected by a network. Note that the configuration of the distributed location for the storage apparatuses according to the present invention is not limited as exemplified by Fig. 1, and rather the number of storage units or the respective locations can be determined discretionarily.

Meanwhile, the collator 2 comprises a multimedia information acquisition unit 21, and a multimedia information collation unit 22 which performs collation processing P1, P2 ad P3.

In Fig. 1, a processing for collating a person subjected to collation ("collation subject" hereinafter) 1 first, the multimedia information acquisition unit 21 acquires multimedia information A1 which is the information for confirming the collation subject 1 from and sends the acquired multimedia information A1 to the multimedia information collation unit 22. The multimedia information A1 sent to the multimedia information collation unit 22 is collated with the multimedia information for collation being stored in the storage units 23, 31 and 41, which are distributedly located in a plurality of places, one after another through the collation processing P1, P2 and P3, respectively.

The multimedia information collation unit 22 performs the collation processing P1, P2 and P3 for the multimedia information A1 in one stage after another, and outputs a respective result, either successful or failed collation, in accordance with a predefined condition respectively for the each stage.

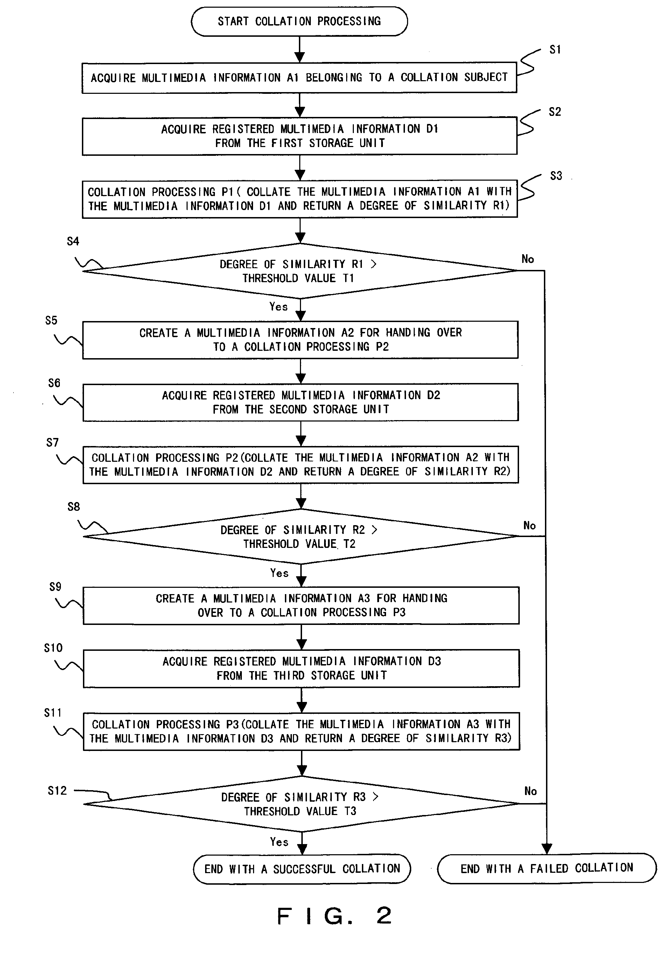

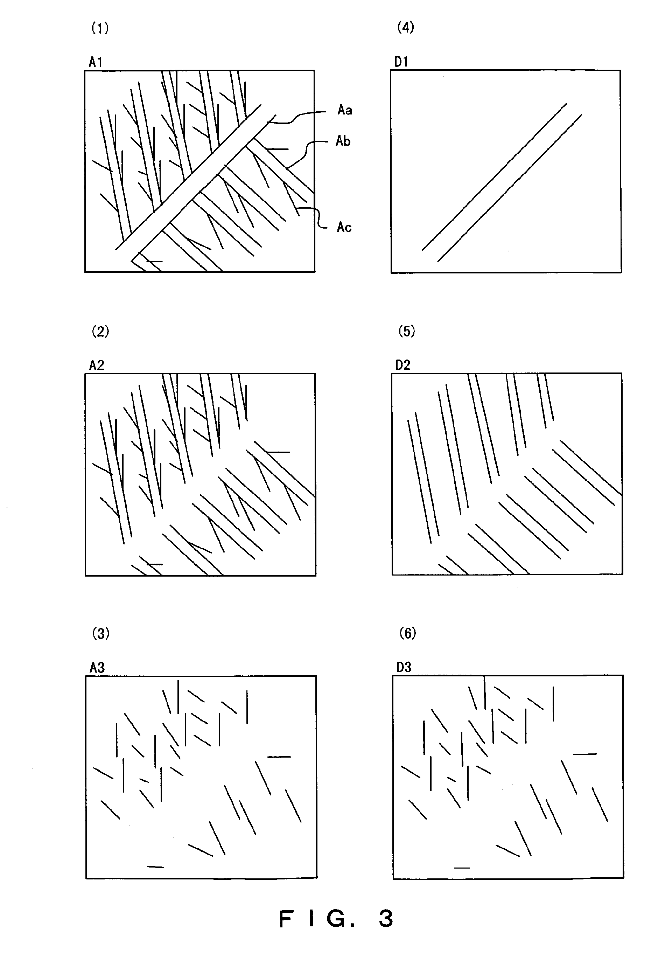

Fig 2 shows a detailed flow chart (example 1) of a collation processing by a multimedia information collation unit 22 according to the present embodiment. Meanwhile, Fig. 3 shows an example of certain multimedia image information used for a collation. In Fig.3 (1), the A1 is made up of, differently sized, three kinds of branches Aa, Ab and Ac. The branches Aa, Ab and Ac, which are the components of the A1, are broken down (i.e., divided) to D1, D2 and D3 (Fig. 3: (4), (5) and (6), respectively) according to the kinds of branches. In the present embodiment, D1, D2 and D3 (Fig. 3 (4), (5) and (6), respectively) are stored in the first storage unit 23, the second storage unit 31 and the third storage unit 41, respectively. Now, the flow chart shown by Fig. 2 will be described while referring to Fig. 3.

First of all, the multimedia information collation unit 22 acquires multimedia information A1 (refer to Fig. 3 (1)) of the collation subject 1 being sent from the multimedia information acquisition unit 21 (step S1. "step" is symbolized by "S" hereinafter). Next acquires registered multimedia information D1 (Refer to Fig. 3 (4)) from the first storage unit 23 (S2).

Next, performs a collation processing P1 (S3) in which the multimedia information A1 is collated with the multimedia information D1 and a degree of similarity R1 is set based on the collation result. More specifically, for instance, the degree of similarity R1 is set according to whether or not the characteristic is in accord with each other between the multimedia information A1 and multimedia information D1 as a result of a collation method such as the pattern matching. For example, if the accord of the characteristic is higher, a "5" is set for the degree of similarity R1, while if the accord thereof is lower, then a "1" is set therefor.

Next, judges whether or not the degree of similarity R1 resulted from the step S3 exceeds a threshold value T1, where the threshold value T1 is a predetermined value (S4). If [degree of similarity R1] ≤ [threshold value T1], then the collation ends with a failed collation.

If [degree of similarity R1] > [threshold value T1], creates a multimedia information A2 (refer to Fig. 3 (2)) for handing it over to a collation processing P2 (S5), in which the multimedia information A1 subtracted by the multimedia information D1 leaves a difference of information that is called the multimedia information A2. Subsequently, acquires a registered multimedia information D2 (refer to Fig. 3 (5)) from the second storage unit 31 (S6).

Next, performs the collation processing P2 which collates the multimedia information A2 with the multimedia information D2 and sets a degree of similarity R2 based on the collation result (S7). The collation method is the same as S3.

Next, judges whether or not the degree of similarity R2 exceeds a threshold value T2 which is a predetermined value (S8). If [degree of similarity R2] ≤ [threshold value T2], then the collation ends with a failed collation.

If [degree of similarity R2] > [threshold value T2], creates a multimedia information A3 in which the multimedia information A2 subtracted by the multimedia information D2 leaves a difference of information that is called the multimedia information A3 (S9). Subsequently, acquires a registered multimedia information D3 (refer to Fig. 3 (6)) from the third storage unit 41 (S10).

Next, performs the collation processing P3 which collates the multimedia information A3 with the multimedia information D3 and sets a degree of similarity R3 based on the collation result (S11). The collation method is the same as S3.

Next, judges whether or not the degree of similarity R3 exceeds a threshold value T3 which is a predetermined value (S12) . If [degree of similarity R3] ≤ [threshold value T3], then the collation ends with a failed collation.

If [degree of similarity R3] > [threshold value T3], then the processing flow ends with a successful collation.

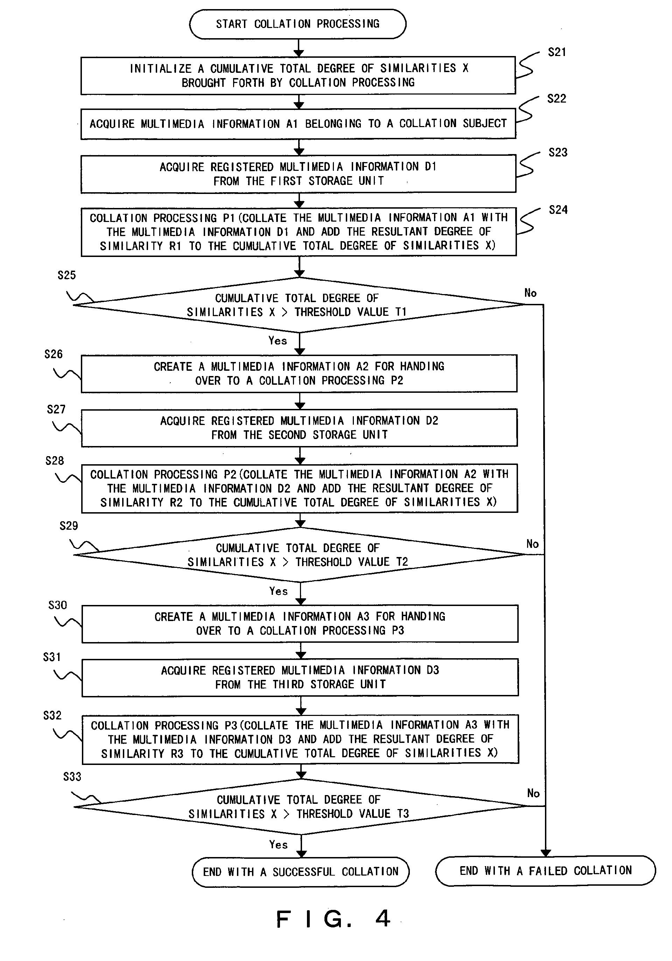

A collation processing by a multimedia information collation unit is not limited to the above described flow as shown by Fig. 2, but may be a processing flow as shown by Fig. 4.

Fig. 4 shows a detailed flow chart (example 2) of a collation processing by the multimedia information collation unit 22 according to the present embodiment. First of all, initializes a cumulative total degree of similarities X, which is a variable for storing a cumulative total of degree of similarities being brought forth by collation processing, to X=0 for instance (S21). Next, the multimedia information collation unit 22 acquires multimedia information A1 belonging to the collation subject 1 sent out from the multimedia information acquisition unit 21 (S22), followed by acquiring registered multimedia information D1 from the first storage apparatus 23 (S23).

Next, performs a collation processing P1 which collates the multimedia information A1 with the multimedia information D1 and calculate a degree of similarity R1 in the same way as S3 shown by Fig. 2 (S24). And stores the calculated degree of similarity R1 in the cumulative total degree of similarities X (i.e., stores a value of the degree of similarity R1 being added to the cumulative total degree of similarities X in the cumulative total degree of similarities X).

Next, judges whether or not the cumulative total degree of similarities X calculated in S24 exceeds a threshold value T1 which is a predetermined value (S25). If [cumulative total degree of similarities X] ≤ [threshold value T1], then the present processing ends with a failed collation.

If [cumulative total degree of similarities X] > [threshold value T1], creates a multimedia information A2 in which the multimedia information A1 subtracted by the multimedia information D1 leaves a difference of information that is called the multimedia information A2 (S26). Subsequently,acquiresregistered multimedia information D2 from the second storage unit 31 (S27).

Next, performs a collation processing P2 which collates the multimedia information A2 with the multimedia information D2 and calculates a degree of similarity R2 in the same way as S24. And, a value of the degree of similarity R2 being added to the cumulative total degree of similarities X is stored in the cumulative total degree of similarities X (S28).

Next, judges whether or not the cumulative total degree of similarities X calculated in S28 exceeds a threshold value T2 (S29). If [cumulative total degree of similarities X] ≤ [threshold value T2], then the present processing ends with a failed collation.

If [cumulative total degree of similarities X] > [threshold value T2], creates a multimedia information A3 in which the multimedia information A2 subtracted by the multimedia information D2 leaves a difference of information that is called the multimedia information A3 (S30). Subsequently, acquires a registered multimedia information D3 from the third storage unit 41 (S31).

Next, performs a collation processing P3 which collates the multimedia information A3 with the multimedia information D3 and calculates a degree of similarity R3 in the same way as S24. And, a value of the degree of similarity R3 being added to the cumulative total degree of similarities X is stored in the cumulative total degree of similarities X (S32).

Next, judges whether or not the cumulative total degree of similarities X calculated in S32 exceeds a threshold value T3 (S33). If [cumulative total degree of similarities X] ≤ [threshold value T3], then the present processing ends with a failed collation.

If [cumulative total degree of similarities X] > [threshold value T3], the processing flow ends with a successful collation. Let it be noted here for the threshold values T1, T2 and T3 that the relationships are T1 < T2 < T3.

An example of condition for a successful collation through the collation processing P1, P2 and P3 is that the each output from the processing P1, P2 and P3, i.e., a degree of similarity of multimedia information, exceeds a predetermined threshold value for the respective processing P1, P2 and P3 in each and every step thereon as shown by Fig. 2. Also, a cumulative total of the degree of similarity of multimedia information respectively outputted from the collation processing P1, P2 and P3 exceeding a predetermined threshold value may be applied to a condition for successful collation as shown by Fig. 4.

Meanwhile, in a 1:N collation (i.e., a collation method for confirming who the collation subject is from among a plurality of registrants), the above described collation processing are performed repeatedly with multimedia information belonging to all the registrants for outputting the information about a person whom the most similar multimedia information belongs to.

A plurality of storage units for storing divided multimedia information can be located in separate apparatuses as shown by the present embodiment. And it is possible to diversify a risk such as a stolen apparatus by locating them distributedly as such.

Meanwhile, it is possible to configure so that a plurality of multimedia information collation units share these collation processing instead of the single multimedia information collation unit performing all as in the present embodiment.

Furthermore, multimedia information handed over to the next stage of collation processing by each collation processing can be one modified by the multimedia information taken out of the respective storage unit and used for the collation. It is possible to speed up the collation processing in the next step by eliminating a piece of information already processed by the prior collation.

As described above, a configuration storing multimedia information dividedly in a plurality of storage apparatuses makes it impossible to pass a collation processing by using a stolen multimedia information part if the part is stolen from a storage unit among the plurality thereof as long as a multimedia information part stored in the remainder of storage units is safe, thereby enhancing the security.

Meanwhile, a configuration repeating a plurality of collation processing for each of divided multimedia informationstepwise,instead ofcollating after merging together the multimedia information which is divided into a plurality of parts, makes it difficult to restore the original multimedia information by using the divided one. Even in case a plurality of multimedia information parts are stolen at the same time, it is difficult to pass the collation processing by using the stolen parts as long as restoring the original multimedia information is very difficult, hence enhancing the security. As with the technique presented by patent document 1, the method of collating after merging the divisionally stored multimedia information is highly risky, because once the merging method has been figured out, restoring the multimedia information aiming at illegitimately passing the collation processing becomes possible.

### [Second embodiment]

In this embodiment, the descriptions are given for distribution and storage of multimedia information. For collation processing, information belonging to a collation subject (i.e., legitimate user) must be readily stored in the storage units (e.g., the first, second and third storage units) of a collator.

Therefore the description is hereby given to the registration in the present embodiment.

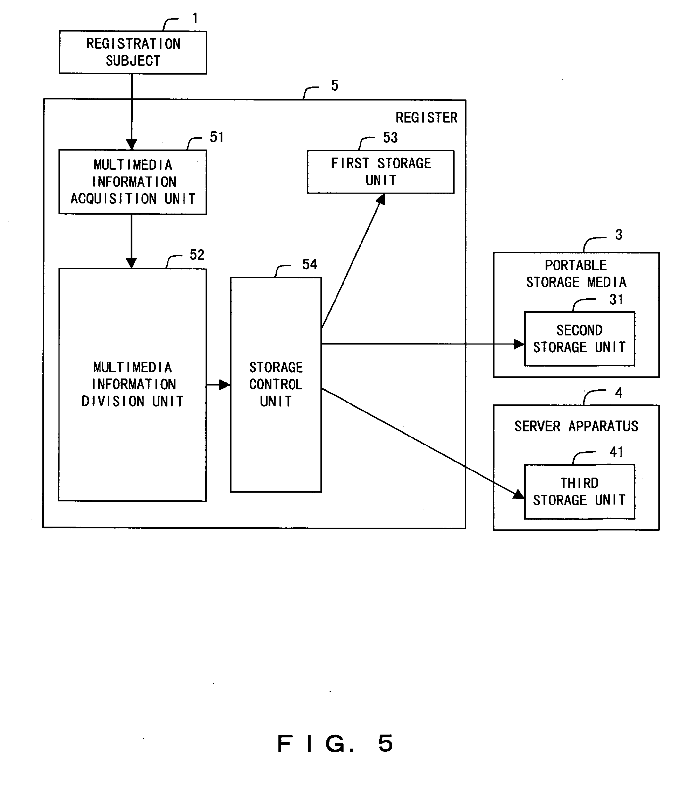

Fig. 5 illustrates the interior of a register according to the present embodiment. First, at the time of registration, a multimedia information acquisition unit 51 acquires multimedia information B belonging to a person to be registered ("registration subject" hereinafter) and sends it to a multimedia information division unit 52. The multimedia information division unit 52 divides the received multimedia information B into a plurality of parts (N.B. : the present embodiment divides into three parts, but it is not limited as such; also, the terminology, "part (s) " of divided multimedia information is sometimes used for a convenience or easy understanding of description herein while there is no material difference from the "divided multimedia information"), and a storage control unit 54 stores a respective divided information part in a first storage unit 53, a second storage unit 31 and a third storage unit 41.

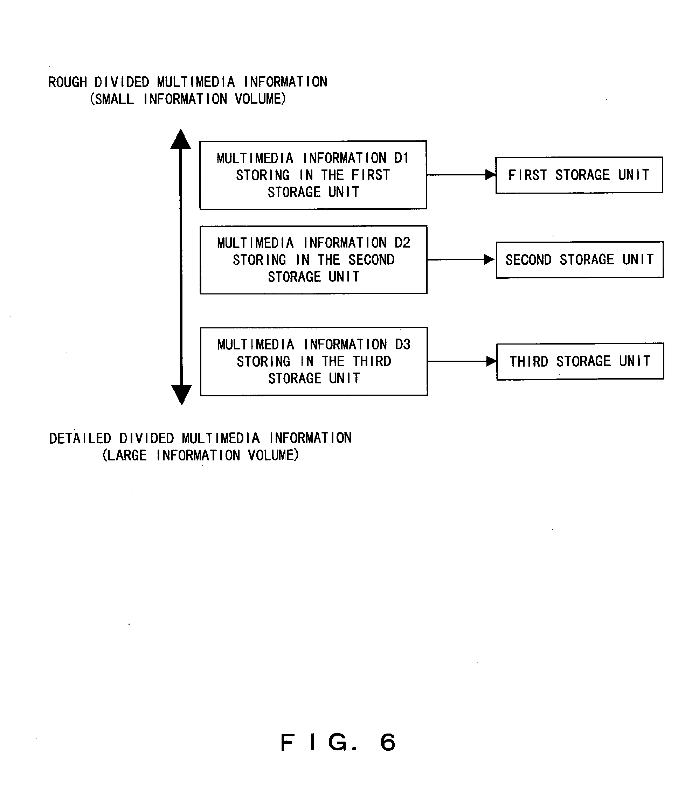

Fig. 6 illustrates how three-part division of multimedia information divided by the multimedia information division unit 52 is stored in respective storage units by the storage control unit 54. In Fig. 1, the multimedia information respectively stored in the first storage unit 23, the second storage unit 31 and the third storage unit 41 on one hand is now divided into ones ranging from rough multimedia information having a small volume of information to detailed multimedia information having a large volume thereof as shown by Fig. 6. And the divided multimedia information parts are respectively stored in each storage unit. Such division methods include the one dividing by the height of frequency in image data for instance, in which case an abstracted image having a low frequency component corresponds to the rough division multimedia information D1, an abstracted image having a high frequency component corresponds to the detailed division multimedia information D3, and an abstracted image having the intermediate frequency component corresponds to the division multimedia information D2.

In the first embodiment (refer to Fig. 2), making divided multimedia information to be subjected to collation first, that is, in the collation processing P1, the more rough information, and making divided multimedia information to be subjected to collation later the more detailed information, enable the collation processing in the earlier stages to be processed by a smaller volume of information and the non-accord data to be screened out in high speed, thereby shortening the average collation processing time.

Note that while a divided multimedia information part is stored in the first storage unit 53 equipped in the register 5 in the present embodiment, it may be stored in the first storage unit 23 of the collator 2 by way of a network, et cetera. Or, it is also possible to store the information, which is stored in the first storage unit 53 of the register 5, temporarily in a portable storage media, et cetera, have the collator 2 read out of the portable storage media and then store the information, which is stored in the portable storage media, in the first storage unit 23 of the collator 2. Furthermore, while the collator 2 and the register 5 are installed separately from each other in the first and second embodiments, the configuration is not limited as such and, rather, a collator and a register may be made co-resident in a single apparatus. Having thus noted, let it be assumed that the same information stored in the first storage unit 53 is now stored in the first storage unit 23 in the following description. Therefore, let it be defined that the number "53" is used as the first storage unit at the time of storing; whereas the "23" is used as the first storage at the time of collation.

Generally speaking, as described above, a rough collation processing by using a small volume of information is relatively faster than a detailed collation by using a large volume thereof. Accordingly, when the multimedia information belonging to a person is divided in the first embodiment, dividing it stepwise ranging from the information for a rough collation processing to the information for a detailed collation processing and, when collation processing is performed, starting with a rough collation processing and then gradually moving to a more detailed processing stepwise will eliminate cases which do not match in the more rough collation before moving to the more detailed collation processing, not requiring all collation processing to the end. This will enable the average time required for collation processing of multimedia information belonging to a person to be shorter than the conventional technique.

Meanwhile, while the patent document 1 offers the technique of simply dividing multimedia information belonging to a person into two parts by the division ratio M, the technique is hopeless in improving the processing speed because a collation processing has to follow merging the divided information. On the contrary, the time for merging the divided multimedia information is an additional time to waste.

Further in the present embodiment, storing a detailed multimedia information belonging to a specific person in a portable storage media and rough multimedia information in a server make it possible to perform a low precision collation without the portable storage media, while a high precision collation therewith, that is, a different service can be provided depending on the presence or absence of the portable storage media.

Or conversely, storing rough multimedia information belonging to a specific person in a portable storage media or a storage unit equipped in a collator and detailed multimedia information in a server make it possible to perform a low precision collation just by using the multimedia information stored either in a portable storage media or a storage unit equipped in a collator, while a high precision collation when connected with a server, thus providing different levels of service between usages in local and in connection with the server.

### [Third embodiment]

In this embodiment, multimedia information divided stepwise ranging from rough information to detailed information as described in the second embodiment is further divided into a plurality of parts, and stored in a plurality of different storage units by combining the further divided parts arbitrarily.

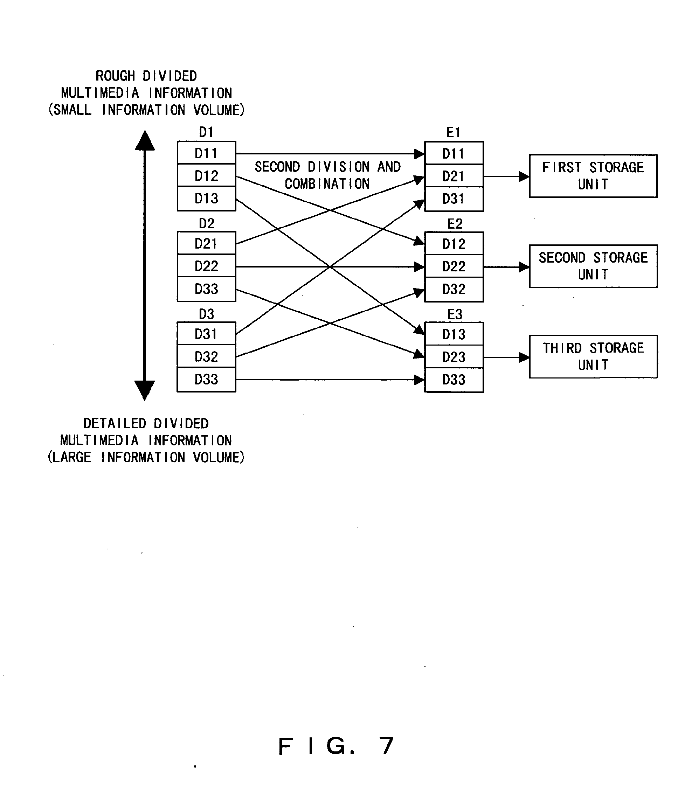

Fig. 7 shows a concept for division and combination according to the present embodiment. In Fig. 7, the multimedia information divided into three parts D1, D2 and D3 are further divided into three parts ((D11, D12 and D13), (D21, D22, and D23) and (D31, D32 and D33)), the further divided nine parts are combined into three in a group (i.e., E1, E2 and E3) and the new groups E1, E2 and E3 are stored in the first storage unit 53, the second storage unit 31 and the third storage unit 41, respectively.

Let it be explained here about combining into the three for a group. Focusing on D1, which is further divided into D11, D12 and D13, and when combining one with the other, none of them will not be in the same group. The same consideration is given to D2 and D3. Thus, three groups of multimedia information are created: E1 (D11, D21 and D31), E2 (D12, D22 and D32) and E3 (D13, D23 and D33), and these are stored in the first, second and third storage units, respectively.

The register 5 according to the present embodiment is the same as the register shown by Fig. 5 in which the above described division and combination are performed by the multimedia information division unit 52. First, the multimedia information belonging to a registration subject acquired by the multimedia information acquisition unit 51 is sent out to the multimedia information division unit 52 in which the multimedia information is divided and further divided by the procedure as described above and the storage control unit 54 stores them in the respective storage units 53, 31 and 41.

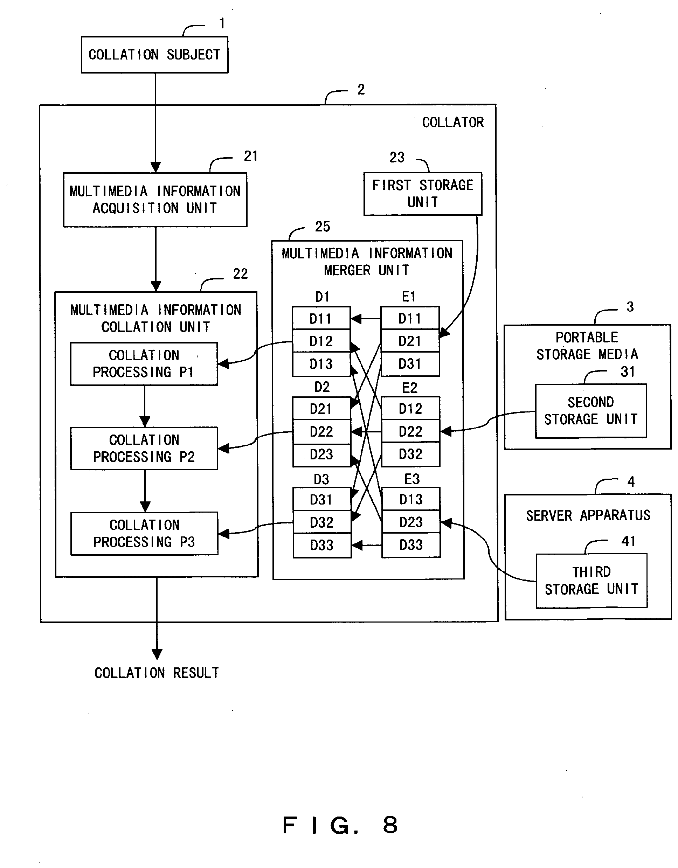

Fig. 8 shows how the multimedia information further divided and combined in Fig. 7 is collated. The collation processing is the same as with the first embodiment. When the multimedia information D1 is acquired for the collation processing P1 (corresponding to processing S2 shown by Fig. 2), E1, E2 and E3 are acquired from the first storage unit 23, the second storage unit 31 and the third storage unit 41, respectively. A multimedia information merger unit 25 takes D11, D12 and D13 out of E1, E2 and E3, respectively, and reconstructs D1 from the aforementioned three.

For the collation processing P2 and P3, the multimedia information D2 and D3 are acquired in the same manner.

Thus the multimedia information taken out of each storage unit is reconstructed, followed by applying it to the collation processing in each stage.

As described above, the configuration according to the second embodiment has had a risk of passing the first stage of collation if the rough multimedia information used for the first stage of thereof is stolen and illegitimately used. Contrarily, further dividing the multimedia information divided stepwise ranging from the information for a rough collation processing to the information for a detailed collation processing, combining and storing in different storage units make it impossible to pass even one stage of collation processing just by using a stolen multimedia information if one of the divided multimedia information stored in any of the storage units is stolen.

### [Fourth embodiment]

In the present embodiment, the configuration is such that when using divisionally stored multimedia information for a collation processing, selects and uses a required storage unit in compliance with the requirement of the collator. Meanwhile, the collator is the same as the first embodiment.

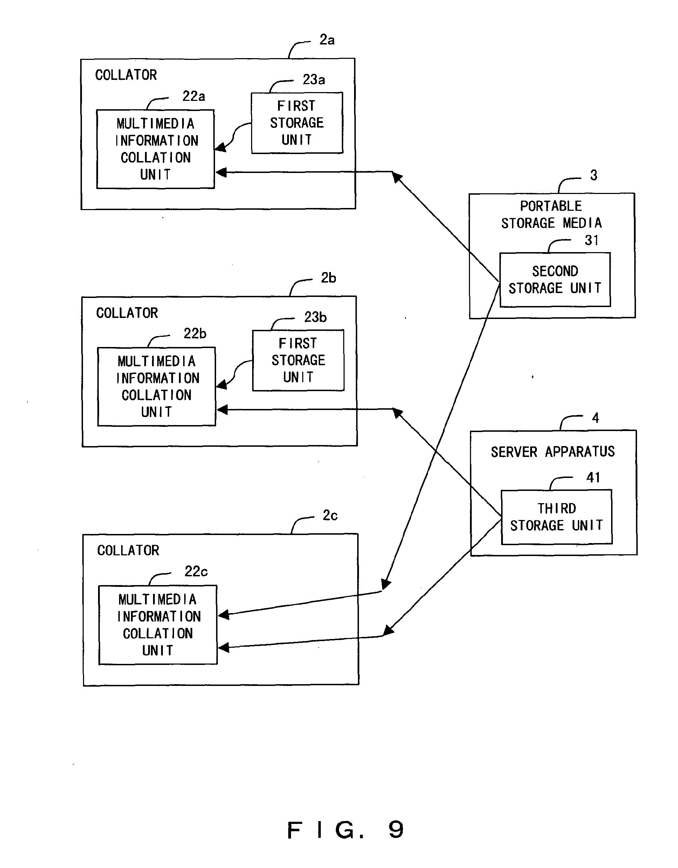

Fig. 9 shows an example pattern of collator comprising a selection of the required storage units according to the present embodiment. In Fig. 9, a collator 2a is configured to obtain multimedia information used for a collation processing performed by a multimedia information collation unit 22a from a first storage unit 23a and a second storage unit 31 equipped in a portable storage media 3. A collator 2b is configured to obtain multimedia information used for a collation processing performed by a multimedia information collation unit 22b from a first storage unit 23b and a third storage unit 41 equipped in a server apparatus 4. A collator 2c is configured to obtain multimedia information used for a collation processing performed by a multimedia information collation unit 22c from the second storage unit 31 equipped in the portable storage media 3 and the third storage unit 41 equipped in the server apparatus 4.

This configuration of selective use of storage units is also capable of controlling the security. When comparing client apparatuses with a server apparatus, the security is generally less tight on the outside of the server (that is, the closer to the client apparatuses). In Fig. 9 therefore, the highest security is existent with the collator 2c which does not obtain information from the storage unit equipped in a client apparatus; the next highest is existent with the collator 2b; and the lowest security is existent with the collator 2a which does not obtain information from the storage unit equipped in a server apparatus.

On the other hand, let it be given a thought about acquisition time for multimedia information. Generally speaking, the acquisition time is shorter for acquiring information from a user terminal, that is, a storage unit closer to a client apparatus as compared to a storage unit equipped in a server apparatus inevitably by way of a network.

Therefore, it is possible to configure a collator by selecting storage units for acquiring multimedia information depending on the various usage priority such as the security first or the data acquisition time first (i.e., shortening collation processing time).

As such, a configuration is available to use selectively the required storage units for using divisionally stored multimedia information in a collation processing. Thus, it is possible to respond to various requirements without changing contents to store in storage units.

It is also possible to give redundancy to the divided multimedia information to be stored in each storage unit when dividing the information. Referring to Fig. 9, it is possible to store the same piece of information redundantly in the first storage unit 23a and the second storage unit 23b for instance, enabling a collation processing without imposing load on the communication path.

As described thus far, when divisionally storing multimedia information belonging to a person in a plurality of storage units and performing collation processing by using the divided multimedia information in the first embodiment, it is possible to respond to various situations without changing the stored information by performing the collation processing by selecting the necessary information only from among the divisionally stored multimedia information in order to satisfy the requirement levels according to diverse situations such as a precision of collation, a processing time or an information transmission volume.

In a situation such as a high speed collation processing or a reduced information transmission volume, it is possible to improve speed or reduce transmission volume by performing collation by using information acquired from a small number of storage units or using storage units storing rough information.

In a situation where a high precision collation is required, a high precision collation is accomplished by performing a collation by using information acquired from a large number of storage units or using storage units storing more detailed information.

### [Fifth embodiment]

The present embodiment changes divided multimedia information to be processed in higher priority from among the information stored in storage units. That is, discretionarily changes a sequence of acquisition when acquiring multimedia information from respective storage units.

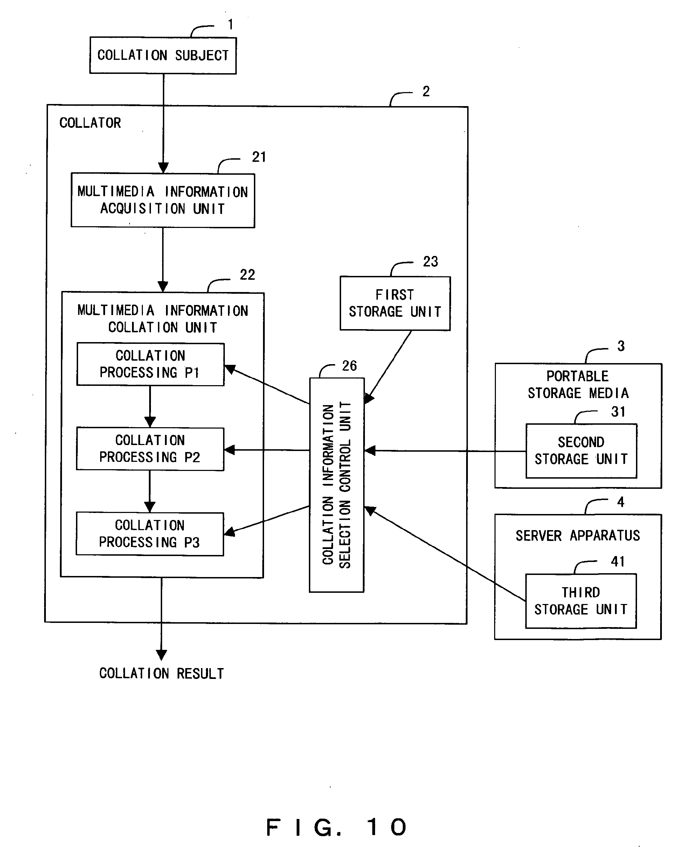

Fig. 10 shows the collator 2 equipped with a collation information selection control unit 26 according to the present embodiment. The collator is the same as the first embodiment. Hereupon, a control by the collation information selection control unit 26 is capable of changing acquisition sequence when acquiring multimedia information from the first storage unit 23, the second storage unit 31 and the third storage unit 41 for processing in correspondence with S2, S6 and S10, respectively, all of which are shown in Fig. 2. For instance, it is capable of acquiring multimedia information in the sequence of the third storage unit 41, the first storage unit 23 followed by the second storage unit 31 for a certain occasion; or in the sequence of the second storage unit 31, the third storage unit 41 followed by the first storage unit 23 for another.

The advantage of such changing the sequence of acquisition includes a priority collation of a certain attribute from among the stored information having the different attributes for respective storage units. For instance, if voice information in the first storage unit, facial image information in the second storage unit and finger print information in the third storage unit are respectively stored, a finger print collation can be done first. Similar example is, the same kind of information and yet in different parts (e.g., finger prints, and yet the thumb and the middle finger) may be stored in respective storage unit so as to perform a finger print collation for the thumb in a higher priority.

Such configuration enables a changeable collation sequence in response to the situation of a collation subject or the collation environment, and in turn a highly flexible collation processing.

A prioritized or flexible application of the divided multimedia information in response to the collation subject or the environment enables an improvement in processing speed and convenience.

### [Sixth embodiment]

The present embodiment encrypts respectively each divided multimedia information part which has been described in the second embodiment, and stores decryption keys for decrypting the encryption in a separate storage unit from the encrypted divided multimedia information.

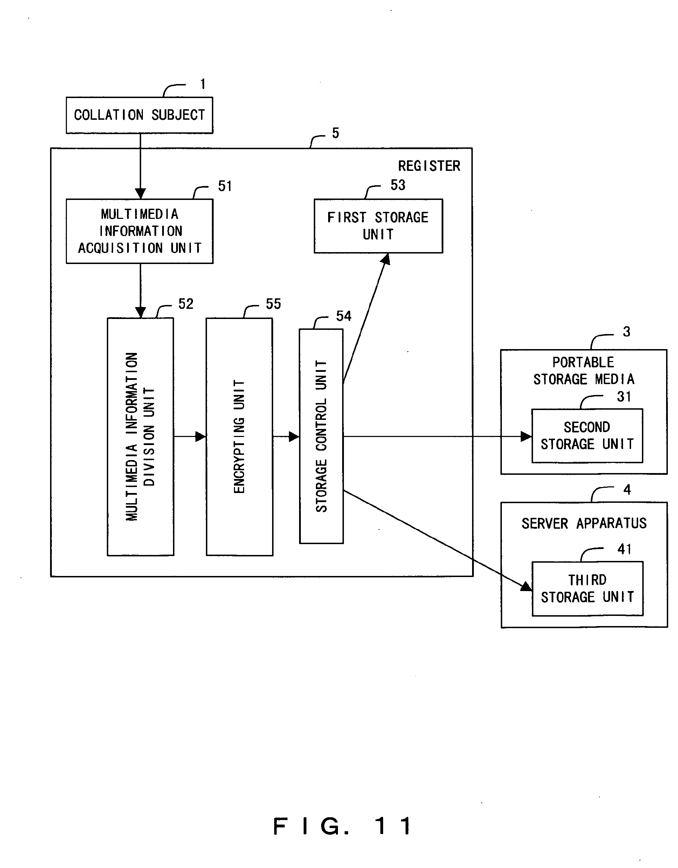

Fig. 11 illustrates a register 5 according to the present embodiment. First, a multimedia information acquisition unit 51 acquires multimedia information B belonging to a registration subject and sends the multimedia information B to a multimedia information division unit 52 which divides the received multimedia information B and sends out a group of the divided multimedia information to an encrypting unit 55 which in turn encrypts the received group of the divided multimedia information. The storage control unit 54 respectively stores the encrypted group of the divided multimedia information in each of the storage units 23, 31 and 41.

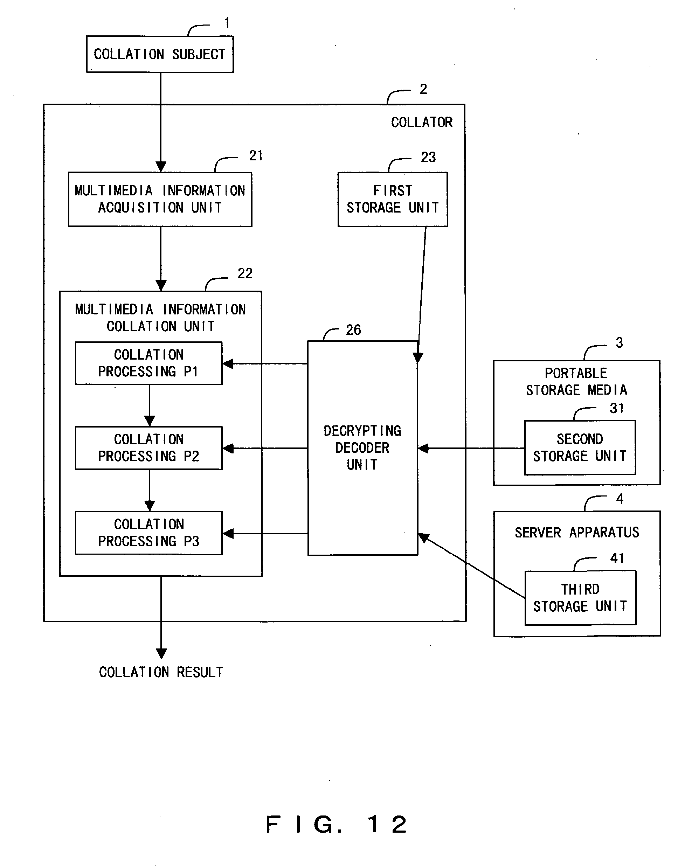

Fig. 12 illustrates a collator according to the present embodiment. A multimedia information acquisition unit 21 acquires multimedia information A belonging to a collation subject 1 and sends out the multimedia information A to a multimedia information collation unit 22 which performs collation processing P1, P2 and P3 in each of which the multimedia information for collating with the multimedia information A is acquired from the respective storage units. In the processing, the encrypted divided group of multimedia information parts taken out of the respective storage units 23, 31 and 41 are decrypted by a decrypting unit 27 to be used for the respective collation processing P1, P2 and P3.

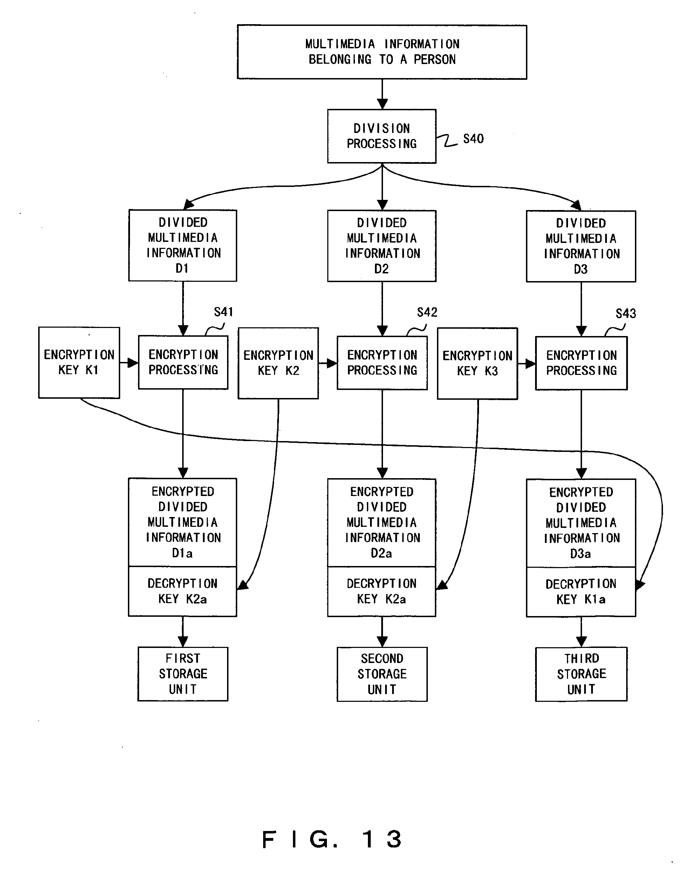

Fig. 13 shows a flow chart of encryption when storing the multimedia information B in storage units according to the present embodiment. First, a division and combination unit divides the multimedia information B (S40), making divided multimedia information D1, D2 and D3 which are then encrypted by the encrypting unit 55 in the procedure as described in the following.

First, the divided multimedia information D1 is encrypted through the encryption key K1 (S41), becoming an encrypted divided multimedia information D1a. The divided multimedia information D2 is encrypted through the encryption key K2 (S42), becoming an encrypted divided multimedia information D2a. The divided multimedia information D3 is encrypted through the encryption key K3 (S43), becoming an encrypted divided multimediainformation D3a. Here, the encryption adopts the common key system, and therefore the encryption and decryption keys are the same.

Then the encrypted divided multimedia information D1a is stored in the first storage unit 53 along with the decryption key K2a (i.e., the encryption key K2); the encrypted divided multimedia information D2a is stored in the second storage unit 31 along with the decryption key K3a (i.e., the encryption key K3); and the encrypted divided multimedia information D3a is stored in the third storage unit 41 along with the decryption key K1a (i.e., the encryption key K1).

As described above, each divided multimedia information part is respectively encrypted and stored in a storage unit being different from the one storing the decryption key for decrypting the encryption.

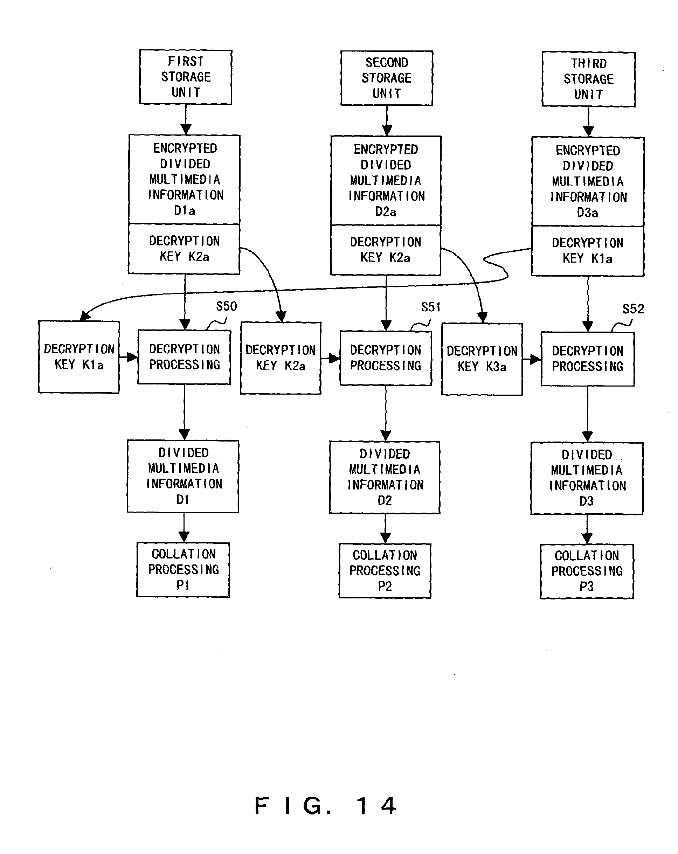

Fig. 14 shows a flow chart of decrypting the encrypted divided multimedia information according to the present embodiment. First, as the collation processing P1 is initiated, the decrypting unit 27 acquires the encrypted divided multimedia information D1a and the decryption key K2a from the first storage unit 23; and the encrypted divided multimedia information D3a and the decryption key K1a from the third storage unit 41. Then the encrypted divided multimedia information D1a is decrypted by using the decryption key K1a (550), gaining the divided multimedia information D1 which will be used for the collation processing P1.

Then, as the collation processing P2 is initiated, the decrypting unit 27 acquires the encrypted divided multimedia information D2a and the decryption key K3a from the second storage unit 31. As it has already acquired the decryption key K2a for decrypting the encrypted divided multimedia information D2a during the collation processing P1, the encrypted divided multimedia information D2a is decrypted by using the decryption key K2a (S51), gaining the divided multimedia information D2 which will be used for the collation processing P2.

Then, as the collation processing P3 is initiated, the decrypting unit 27 likewise above decrypts the encrypted divided multimedia information D3a by using the decryption key K3a, both already acquired during the collation processing P1 and P2 (S52), gaining the divided multimedia information D3 which will be used for the collation processing P3.

As described above, the encrypted information is decrypted by using the decryption key being stored in a different storage unit at the time of collation processing, followed by the collation processing according to the first embodiment. Such configuration makes it possible to acquire simultaneously the decryption key for decrypting the divided multimedia information to be used in the next stage of collation processing when performing each collation processing, decrypt quickly the divided multimedia information to be used in the next stage of collation processing and therefore perform the collation processing efficiently.

As described thus far, encrypting the dividedly stored multimedia information enhances the security. Storing the key information for decrypting the encrypted multimedia information in a storage unit separately from the one storing the encrypted multimedia information itself in the process prevents an illegitimate decrypting if the encrypted multimedia information is stolen, since the key for decrypting the encryption is stored in a different storage unit.

### [Seventh embodiment]

The present embodiment encrypts each divided multimedia information part being described in the second embodiment by using a respective encryption key which is generated based on a different divided multimedia information part. The present embodiment uses the same register as shown by Fig. 11 and the same collator as shown by Fig. 12. The collation processing itself is the same as the first embodiment.

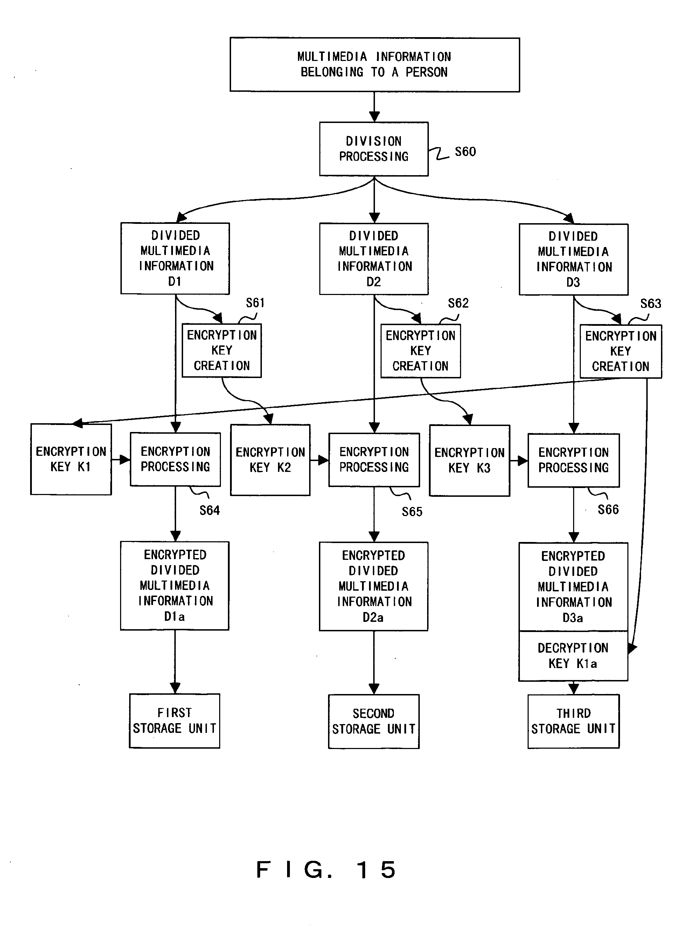

Fig. 15 shows a flow chart of encryption when storing multimedia information in the storage units according to the present embodiment. First, the multimedia information acquisition unit 51 acquires multimedia information B belonging to a registration subject, and the multimedia information division unit 52 divides the multimedia information (S60), making the divided multimedia information D1, D2 and D3. Next, creates an encryption key K2 from the divided multimedia information D1 by using an encryption function (e.g., hash function) (S61). Likewise, creates respective encryption keys K3 and K1 also for the divided multimedia information D2 and D3, respectively (S62, S63).

The dividedmultimedia information D1 is encrypted by the encryption key K1 (S64), becoming the encrypted divided multimedia information D1a. The divided multimedia information D2 is encrypted by the encryption key K2 (S65), becoming the encrypted divided multimedia information D2a. The divided multimedia information D3 is encrypted by the encryption key K3 (S66), becoming the encrypteddividedmultimedia information D3a. Here, the encryption adopts the common key system, and therefore the encryption and decryption keys are the same.

Then the storage control unit 54 stores the divided multimedia information D1a in the first storage 53, and the divided multimedia information D2a in the second storage unit 31. And stores the divided multimedia information D3a in the third storage unit 41 along with a decryption key K1a (that is, the encryption key K1) .

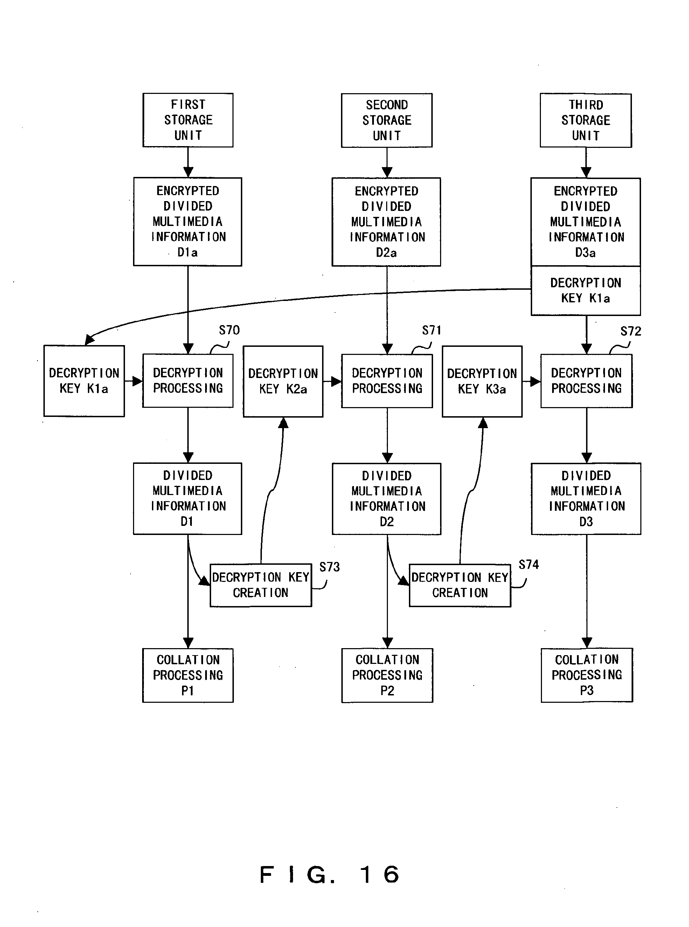

Fig. 16 shows a flow chart of decrypting the encrypted divided multimedia information according to the present embodiment. First, as the collation processing P1 is initiated, the decrypting unit 27 acquires the encrypted divided multimedia information D1a from the first storage unit 23, and the encrypted divided multimedia information D3a and the decryption key K1a from the third storage unit, followed by decrypting the encrypted divided multimedia information D1a by using the decryption key K1a (S70), gaining the divided multimedia information D1 which will be used for the collation processing P1.

Next, as the collation processing P2 is initiated, the decrypting unit 27 acquires the encrypted divided multimedia information D2a from the second storage unit 31. And acquire a decryption key K2a from the divided multimedia information D1 acquired during the collation processing P1 by using an encryption function. Then decrypts the encrypted divided multimedia information D2a by using the decryption key K2a (S71), gaining the divided multimedia information D2 which will be used for the collation processing P2.

Next, as the collation processing P3 is initiated, the decrypting unit 27 acquires a decryption key K3a from the divided multimedia information D2 acquired during the collation processing P2 by using an encryption function. Then decrypts the encrypted divided multimedia information D3a acquired during the collation processing P1 by using the decryption key K3a (S72), gaining the divided multimedia information D3 which will be used for the collation processing P3.

As such, creates a decryption key from the divided multimedia information stored in a different storage unit for decrypting the encryption at the time of a collation processing, decrypts the encryption and subsequently performs the collation processing as the first embodiment. Such configuration makes it possible to create simultaneously the decryption key for decrypting the divided multimedia information to be used in the next stage of collation processing during each of the current collation processing, decrypt immediately the dividedmultimedia information for the next collation processing and perform the collation processing in high efficiency.

But, since all the multimedia information is encrypted, it may not be possible to create a decryption key and thus decrypt the encryption, at least one decryption key needs to be obtained by separate means. In the present embodiment, the configuration is storing the decryption key for decrypting the encrypted divided multimedia information D3a without an encryption in the third storage unit 41. This configuration also prevents an illegitimate decrypting of the encrypted multimedia information unless the stored information in the first and third storage units are simultaneously stolen, hence maintaining the security level high.

As described, encrypting the divisionally stored multimedia information improves the security as with the sixth embodiment. In the process, creating the key information for decrypting the encrypted multimedia information based on different multimedia information being stored in a different storage unit from the one which the former information is stored in will not allow an illegitimate decrypting if the encrypted multimedia information is stolen because the decryption key therefore is based on the multimedia information being stored in a different storage unit.

### [Eighth Embodiment]

The present embodiment encrypts each divided multimedia information part being described in the second embodiment respectively by using a respective encryption key which is generated based on a different divided multimedia information part. The present embodiment uses the same register as shown by Fig. 11 and the same collator as shown by Fig. 12. The collation processing itself is the same as the first embodiment.

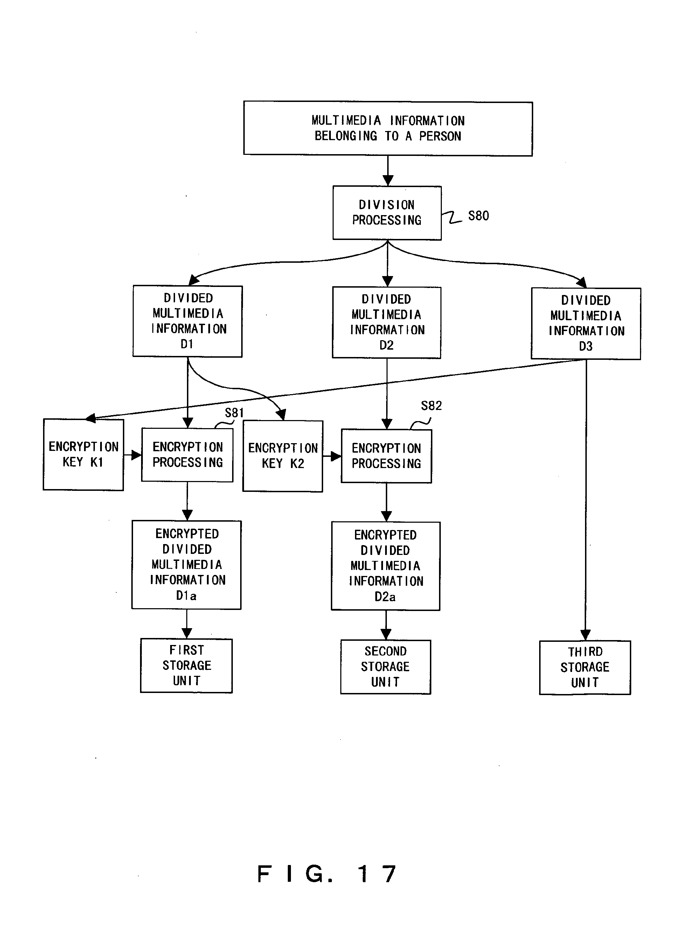

Fig. 17 shows a flow chart (example 1) of encryption when storing multimedia information in storage units according to the present embodiment. First, the multimedia information acquisition unit 51 acquires multimedia information B belonging to a registration subject, the multimedia information division unit 52 divides the multimedia information (S80), making the divided multimedia information D1, D2 and D3. The encrypting unit 55 encrypts divided multimedia information D1 by the divided multimedia information D3 (S81), gaining the encrypted divided multimedia information D1a. The encrypting processing here is a logic operation (e.g., AND operation, OR operation, EXCLUSIVE-OR operation) between the bit information constituting the divided multimedia information D1 and the bit information constituting the divided multimedia information D3. Then the storage control unit 54 stores the encrypted divided multimedia information D1a gained by S81 in the first storage unit 53.

The divided multimedia information D2, as with the above described, is encrypted by the divided multimedia information D1 (S82), gaining the encrypted divided multimedia information D2a which will be stored in the second storage unit 31.

The divided multimedia information D3 will be stored in the third storage unit 41 as is, instead of being encrypted.

As described, each divided multimedia information part is respectively encrypted by an encryption key by using a divided multimedia information part different from the one being encrypted.

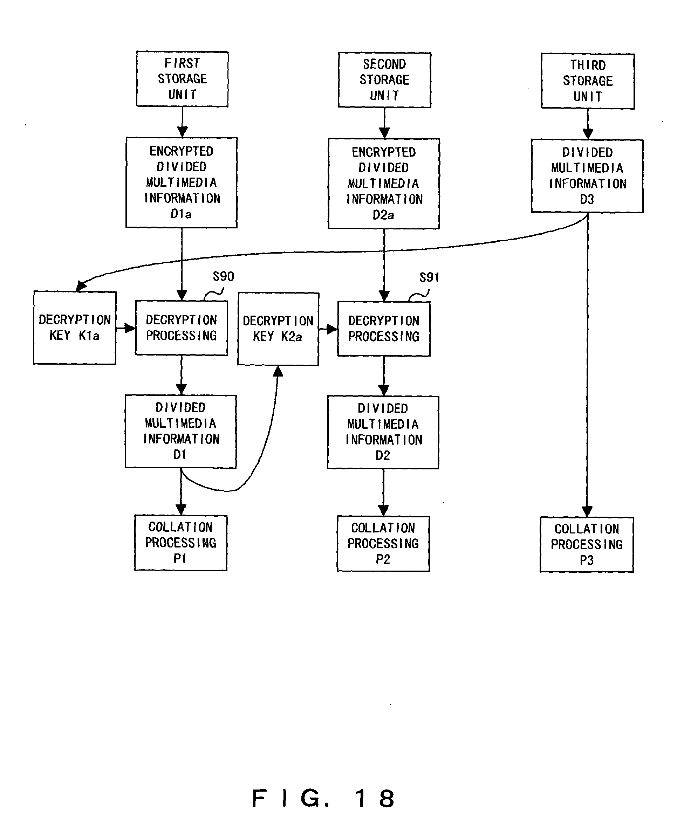

Fig. 18 shows a flowchart (example 1) of decrypting encrypted divided multimedia information according to the present embodiment. First, as the collation processing P1 is initiated, the decrypting unit 27 acquires the encrypted divided multimedia information D1a from the first storage unit 23 and the divided multimedia information D3 from the third storage unit 41. The encrypted divided multimedia information D1a is decrypted by using the divided multimedia information D3 as the decryption key K1a (S90), gaining the divided multimedia information D1.

Next, as the collation processing P2 is initiated, the decrypting unit 27 acquires the encrypted divided multimedia information D2a from the second storage unit 31. The encrypted divided multimedia information D2a is decrypted by using the divided multimedia information D1 as the decryption key K2a (S91), gaining the divided multimedia information D2.

Next, as the collation processing P3 is initiated, the decrypting unit 27 hands the already acquired divided multimedia information D3 over to the collation processing P3.

As such, decrypts the encryption by using the divided multimedia information stored in a different storage unit as the decryption key for decrypting the encryption at the time of a collation processing, followed by performing a collation processing according to the first embodiment. Such configuration makes it possible to create simultaneously the decryption key for decrypting the divided multimedia information to be used in the next stage of collation processing during each of the current collation processing, decrypt immediately the divided multimedia information to be used for the next collation processing and perform the collation processing in a high efficiency.

But, if all the multimedia information is stored in the encrypted files, it is not possible to decrypt any of them, therefore at least any one file of the multimedia information needs to be stored un-encrypted. The present embodiment is configured to store the divided multimedia information D3 to be stored in the third storage unit un-encrypted. This configuration also does not allow an illegitimate decrypting of the encrypted multimedia information unless the information stored in the first and third storage units is simultaneously stolen, hence maintaining the security level high.

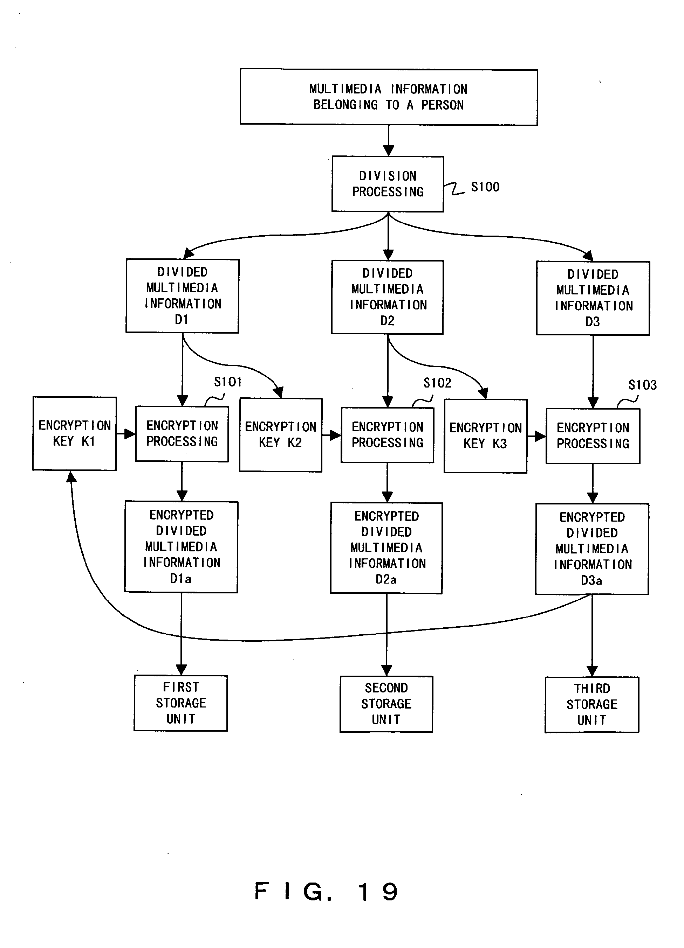

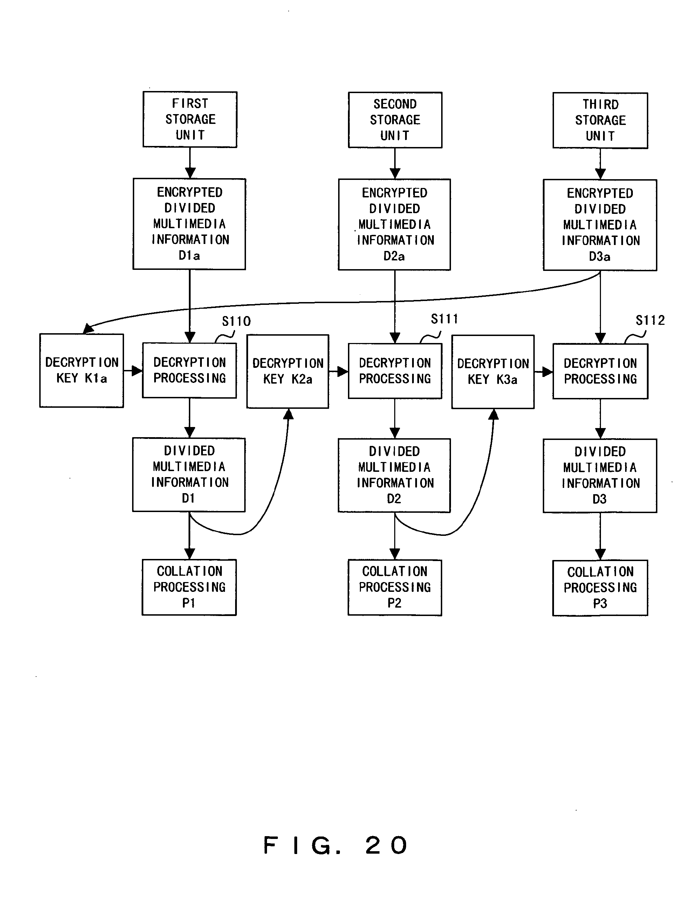

Meanwhile, the processing flow of the present embodiment may be modified as shown by Figs. 19 or 20.

Fig. 19 shows a flowchart (example 2) of encryption when storing the multimedia information in storage units according to the present embodiment. First, the multimedia information division unit 52 divides the multimedia information B belonging to a registration subject (S100), making divided multimedia information D1, D2 and D3 . The encrypting unit 55 encrypts the divided multimedia information D2 by using the divided multimedia information D1 (S102), gaining the encrypted divided multimedia information D2a, in which the encryption processing is the same as the description for Fig. 18. The encrypted divided multimedia information D2a gained by S102 is stored in the second storage unit 31.

Likewise for the multimedia information D3, the divided multimedia information D3 is encrypted by using the divided multimedia information D2 (S103), gaining the encrypted divided multimedia information D3a which will be stored in the third storage unit 41.

As for the multimedia information D1, the divided multimedia information D1 is encrypted by using the encrypted divided multimedia information D3a which has been encrypted in S103 as the encryption key K1 (S101), gaining the encrypted divided multimedia information D1a. And the encrypted divided multimedia information D1a will be stored in the first storage unit 53.

Fig. 20 shows a flow chart (example 2) of decrypting encrypted divided multimedia information according to the present embodiment. First, as the collation processing P1 is initiated, the decrypting unit 27 acquires the encrypted divided multimedia information D1a from the first storage unit 23 and the encrypted dividedmultimedia information D3a from the third storage unit 41, followed by decrypting the encrypted divided multimedia information D1a by using the encrypted divided multimedia information D3a as the decryption key K1a (S110), gaining the divided multimedia information D1.

Next, as the collation processing P2 is initiated, the decrypting unit 27 acquires the encrypted divided multimedia information D2a from the second storage unit 31 and decrypts the encrypted divided multimedia information D2a by using the divided multimedia information D1 as the decryption key K2a (S111), gaining the divided multimedia information D2.

Next, as the collation processing P3 is initiated, the decrypting unit 27 decrypts the encrypted divided multimedia information D3a by using the divided multimedia information D2 as the decryption key K3a (S112), gaining the divided multimedia information D3.

Therefore, using encrypted divided multimedia information as an encryption and decryption keys makes it possible to maintain the security of divided multimedia information as shown by Figs. 19 and 20.

As described above, encrypting the divisionally stored multimedia information enhances security as with the sixth embodiment. In the process, making the key information for decrypting the encrypted multimedia information the different multimedia information being stored in a different storage unit from the one in which the former information is stored will not allow an illegitimate decrypting if the encrypted multimedia information is stolen, because the decryption key therefore is multimedia information stored in a different storage unit.

### [Ninth embodiment]

The present embodiment combines divided multimedia information belonging to a plurality of persons and stores in a plurality of storage units.

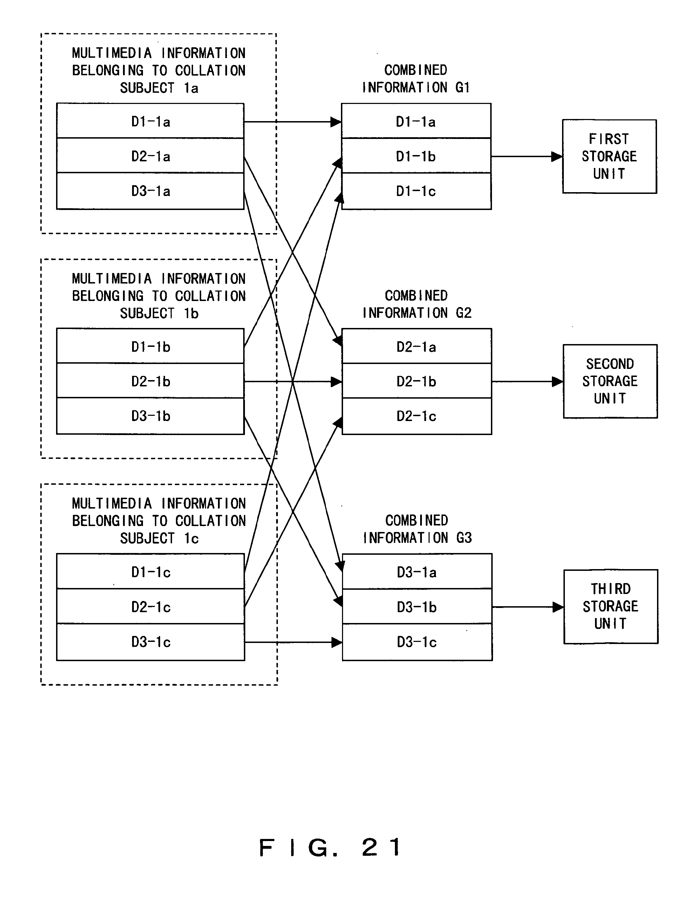

Fig. 21 illustrates how divided multimedia information belonging to a plurality of persons is combined through combination according to the present embodiment. Let it be defined: D1-1a, D2-1a and D3-1a are divided parts of multimedia information A1a belonging to a registration subject 1a; D1-1b, D2-1b and D3-1b are divided parts of multimedia information A1b belonging to a registration subject 1b; and D1-1c, D2-1c and D3-1c are divided parts of multimedia information A1c belonging to a registration subject 1c.

Then, these divided multimedia information parts are combined with that of other persons for storing. Here, the description about combining the above nine dividedparts into three will be given. Focusing on "A1a", the divided information D1-1a, D2-1a and D3-1a shall not be in one group as much as possible. The same goes with A1b and A1c. As such, the three combinations, combined information G1 (D1-1a, D1-1b and D1-1c), combined information G2 (D2-1a, D2-1b and D2-1c) and combined information G3 (D3-1a, D3-1b and D3-1c), are made and stored in the first storage unit 53, the second storage unit 31 and the third storage unit 41, respectively. The general overview of the register according to the present embodiment is the same as Fig. 5 in which the multimedia information belonging to a plurality of registration subjects acquired by the multimedia information acquisition unit 51 is sent out to the multimedia information division unit 52 by which the multimedia information is divided and combined as described above, and then stored in the respective storage units.

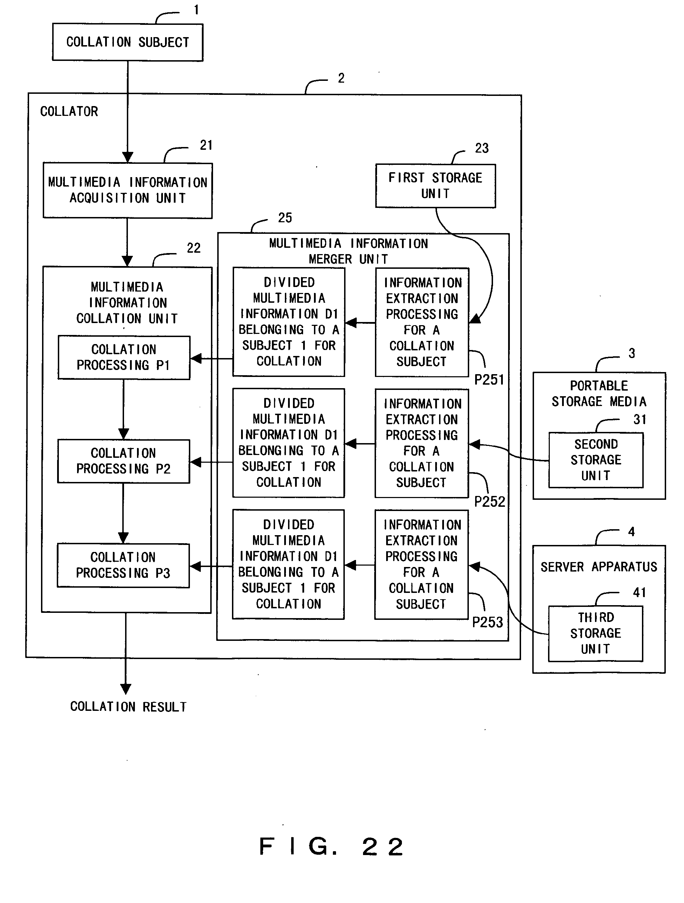

Fig. 22 shows a process for collating the multimedia information divided and combined as shown by Fig. 21. The collation processing itself is the same as the first embodiment. For the collation subject 1a, the collation processing P1 needs to acquire the multimedia information D1-1a belonging to the collation subject 1a. Hence the multimedia information merger unit 25 acquires the combined information G1 (D1-1a, D1-1b and D1-1c) stored in the first storage unit 23, takes D1-1a out of the combined information G1 through an information extraction processing P251 and hands it over to the collation processing P1. Also the multimedia information merger unit 25 acquires the combined information G2 (D2-1a, D2-1b and D2-1c) stored in the second storage unit 31, takes D2-1a out of the combined information G2 through an information extraction processing P252 and hands it over to the collation processing P2. And the multimedia information merger unit 25 acquires the combined information G3 stored in the third storage unit 41, takes D3-1a out of the combined information G3 through an information extraction processing P253 and hands it over to the collation processing P3.

As such, performs the collation processing by using the combined divided multimedia information belonging to a plurality of persons. This configuration makes it difficult to abstract information belonging to a specific person or persons, hence enhancing the security. Alternatively, a data compression is possible during the combination processing, enabling a reduction of information transmission volume.

As described above, storing multimedia information belonging to a plurality of persons in combination makes an illegitimate abstraction of multimedia information belonging to a specific person difficult if the divisionally stored multimedia information is stolen.

### [Tenth embodiment]

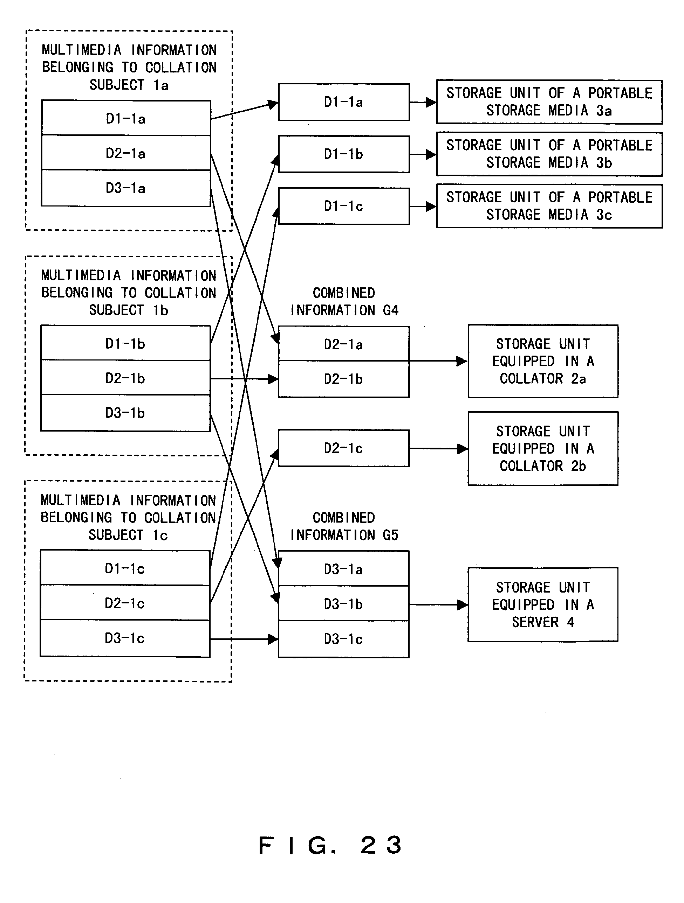

The present embodiment changes the number of registration subjects for respective storage units as shown by Fig. 23. The division processing is the same as the ninth embodiment, whereas the difference from the ninth embodiment is storing not only the divided multimedia information in combinations, but also in various patterns of combinations.

In Fig. 23, the divided information parts D1-1a, D1-1b, D1-1c and D2-1c are respectively stored in the storage unit 31a of a portable media 3a, the storage unit 31b of a portable media 3b, the storage unit 31c of a portable media 3c and the storage unit 23b equipped inacollator2b, singularly. Meanwhile, D2-1a and D2-1b are combined as combined information G4 and stored in the storage unit 23a equipped in a collator 2a. And D3-1a, D3-1b and D3-1c are combined as combined information G5 and stored in the storage unit 41 equipped in a server apparatus 4.

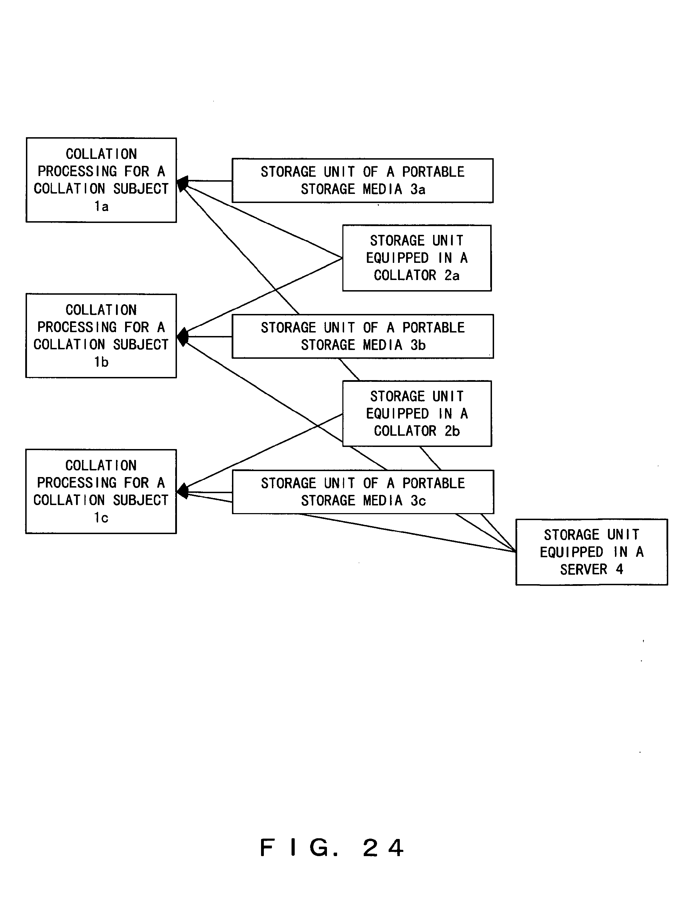

Fig. 24 illustrates processing as to which storage unit the information is to be drawn from at the time of performing collation according to the present embodiment. For collating a collation subject 1a, acquires multimedia information belonging to him from the storage unit 31a of the portable media 3a, the storage unit 23a equipped in the collator 2a and the storage unit 41 equipped in the server apparatus 4. For collating a collation subject 1b, acquires multimedia information belonging to him from the storage unit 31b of the portable media 3b, the storage unit 23a equipped in the collator 2a and the storage unit 41 equipped in the server apparatus 4. For collating a collation subject 1c, acquires multimedia information belonging to him from the storage unit 31c of the portable media 3b, the storage unit 23b equipped in the collator 2b and the storage unit 41 equipped in the server apparatus 4.

Such configuration, storing a divided multimedia information part belonging to a person in a portable storage media so that the portable storage media is stored with information belonging to the person in possession of the aforementioned portable storage media, for instance, make it possible to save storage volume in a portable storage media. It is also possible to save storage volume for the storage unit equipped in a collator by storing only information belonging to persons intending to be collated by the aforementioned collator.

As described above, storing divided multimedia information belonging to a specific person or persons in a portable storage media, et cetera, with a relatively small storage capacity, while storing dividedmultimedia information belonging to a plurality of persons in a server with a large storage capacity make it possible to collate effectively even by using a storage media with a small storage capacity.

Note that, while details of the first to tenth embodiments have been described with regard to the present invention, the collator can naturally be configured as a common computer.

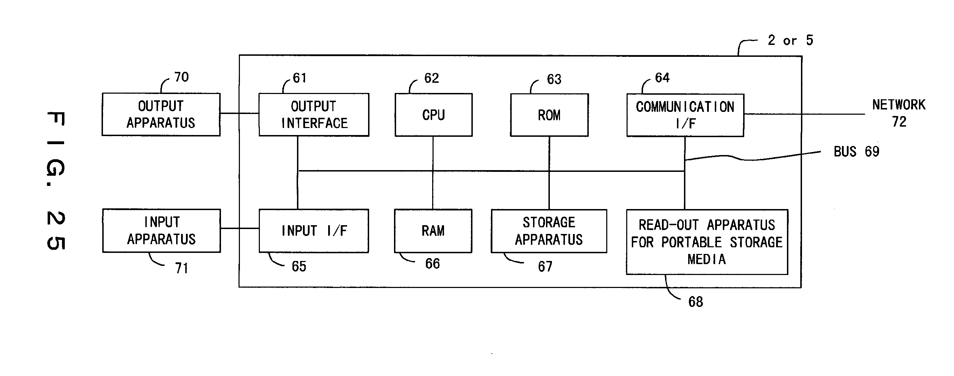

Fig. 25 is a structural block diagram of such a computer, i.e., hardware environment, according to the present invention. In Fig. 25, a computer system comprises a central processing unit (CPU) 62, a read only memory (ROM) 63, a random access memory (RAM) 66, a communication interface (I/F) 64, a storage apparatus 67, an output I/F 61, an input I/F 65, a read-out apparatus 68 for portable storage media, a bus 69 interconnecting the above components, an output apparatus 70 connected with the output I/F 61 and an input apparatus 71 connected with the input I/F 65.

A various types of storage apparatuses such as hard disk, magnetic disk can be adopted for the storage apparatus 67 which, or ROM 63, can be stored with the programs (representing the multimedia information collation unit 22) illustrated by the flow charts as shown by Figs. 2 and 4, the program for the multimedia information division unit 52, the program for the multimedia information merger unit 25, the program for the collation information selection control unit 26, and the programs for the encrypting unit 55 and the decrypting unit 27. And the CPU 62 executing the above programs enables a collation with multimedia information for confirming a person, a division processing for pre-storing the multimedia information for collating a person, and encryption and decryption of such information in accordance with the present embodiments.

The program provider may provide the above described programs by having them transmit themselves through the network 72, via the communication I/F 64 to the storage apparatus 67, or through a commercially available portable storage media to be read out by the read-out apparatus 68, so as to be executed by the CPU 62. A various types of storage media such as CD-ROM, flexible disk, optical disk, magneto optical disk, IC card are available for the portable storage media 3 so that the stored programs is read out by the read-out apparatus 68.

And the input apparatus 71, which corresponds to the multimedia information acquisition unit 21, can adopt keyboard, mouse, or camera, microphone, scanner, tablet, et cetera for taking multimedia information in. Meanwhile the output apparatus 70 can use display, printer, speaker, et cetera.

Meanwhile the network 72 may be the Internet, LAN, WAN, a dedicated line, or a wired or wireless communication networks.

### Applicability to industries

A use of the present invention enables an enhanced security, a high speed collation processing and a reduced load on the communication paths for transmitting multimedia information.

## Claims

1. A collator, comprising:
at least one of a plurality of storage units divisionally storing personal information for confirming a person;
an acquisition unit for acquiring personal information of a confirmation subject which is personal information belonging to the confirmation subject; and
a collation unit for collating personal information of a confirmation subject acquired by the acquisition unit with the stored divided personal information acquired at a first storage unit from among the plurality of storage units, judging whether or not the next stage of collation will be performed based on the collation result and collating in the next stage by using the personal information acquired from a second storage unit out of the plurality of storage units, if the judgment calls for the next stage of collation.

2. The collator in claim 1, wherein said personal information is multimedia information belonging to a person.

3. The collator in claim 1, wherein said collation unit collates a characteristic of personal information of a confirmation subject acquired by said acquisition unit with a characteristic of said stored divided personal information acquired at a first storage unit from among said plurality of storage units and sets a degree of similarity for indicating a degree of accord in the characteristic.

4. A register, comprising:
an acquisition unit for acquiring personal information for confirming a person;
a division unit for dividing the personal information; and
a storage control unit for storing divided personal information, which is the personal information divided into a plurality thereof by the division unit, in a plurality of storage units respectively.

5. The register in claim 4, wherein said division unit divides said personal information stepwise ranging from divided personal information having a large volume of information to divided personal information having a small volume thereof and said storage control unit stores the divided personal information in the respectively different storage units.

6. The collator in claim 1, wherein said collation unit selects said storage unit for use in said collation depending on usage.

7. The collator in claim 1, further comprising an acquisition sequence control unit for defining a sequence of acquiring personal information from among said plurality of storage units.

8. The register in claim 4, further comprising an encrypting unit for encrypting divided personal information divided by said division unit and stored in said storage unit.

9. The collator in claim 1, further comprising a decrypting unit for acquiring encrypted divided personal information, which is said divided personal information being encrypted and stored in said storage unit, and decrypting the acquired encrypted divided personal information.

10. The register in claim 4, wherein said division unit divides said personal information belonging to a plurality of persons, respectively, and groups into a plurality of groups by combining the divided personal information belonging to a person with divided personal information belonging to other person for each group; and said storage control unit stores the combined personal information groups in respectively different ones among said storage units.

11. The collator in claim 1, further comprising an extraction unit for acquiring divided personal information belonging to a plurality of persons from said storage unit and extracting personal information belonging to a predefined person from among the acquired divided personal information belonging to a plurality of persons.

12. The register in claim 4, wherein said division unit divides said personal information belonging to a plurality of persons respectively and said storage control unit stores the divided personal information belonging to a single person in said respectively different storage units.

13. The collator in claim 1, wherein said collation unit acquires a predefined divided personal information from said each storage unit.

14. A collator, comprising:
at least one of a plurality of storage units divisionally storing personal information for confirming a person;
an acquisition unit for acquiring personal information of a confirmation subject which is personal information belonging to a confirmation subject;
a generation unit for acquiring a predefined divided personal information from the plurality of storage units, and generating personal information for a first collation, which is personal information for collation, by combining the acquired divided personal information; and
a collation unit for collating personal information of a confirmation subject acquired by the acquisition unit with the personal information for collation, judging whether or not the next stage of collation will be performed based on the collation result and collating in the next stage by using a second personal information for collation being generated by the generation unit, if the judgment calls for the next stage of collation.

15. A program for having a computer execute the steps of:
a first acquisition step for acquiring personal information from at least one of a plurality of storage units divisionally storing personal information for confirming a person;
a second acquisition step for acquiring personal information of a confirmation subject which is personal information belonging to the confirmation subject; and
a collation step for collating personal information of a confirmation subject acquired by the second acquisition procedure with the divided personal information acquired from a first storage unit from among the plurality of storage units by the first acquisition step, judging whether or not the next stage of collation will be performed based on the collation result and collating in the next stage by using the personal information acquired at a second storage unit from among the plurality of storage units, if the judgment calls for the next stage of collation.

16. In a collator system comprising a client apparatus capable of reading out of a portable storage media, and a server apparatus connected with the client apparatus by way of a network;
wherein the client apparatus comprises:
a division unit for dividing personal information for confirming a person;
a storage control unit for storing dividedpersonal information, which is personal information divided into a plurality of parts by the division unit, in at least two storage units among a storage unit equipped in the client apparatus, the storage media and a storage unit equipped in the server apparatus;
an acquisition unit for acquiring personal information of a confirmation subject which is personal information belonging to the confirmation subject; and
a collation unit for collating the personal information of a confirmation subject acquired by the acquisition unit with the stored personal information acquired at a first storage unit from among the plurality of storage units, judging whether or not the next stage of collation will be performed based on the collation result and collating in the next stage by using the personal information acquired at a second storage unit from among the plurality of storage units, if the judgment calls for the next stage of collation.

17. In a collator system comprising a collator capable of reading out of a portable storage media, and a server apparatus connected with the collator by way of a network;
wherein the collator comprises:
at least two storage units among a storage unit equipped in the collator, the storage media and a storage unit equipped in the server apparatus for divisionally storing personal information for confirming a person;
an acquisition unit for acquiring personal information of a confirmation subject which is personal information belonging to the confirmation subject; and
a collation unit for collating the personal information of a confirmation subject acquired by the acquisition unit with the stored divided personal information acquired at a first storage unit from among the plurality of storage units, judging whether or not the next stage of collation will be performed based on the collation result and collating in the next stage by using the personal information acquired at a second storage unit from among the plurality of storage units, if the judgment calls for the next stage of collation.

18. In a register system comprising a register capable of reading out of a portable storage media, and a server apparatus connected with the register by way of a network;
wherein the register comprises:
an acquisition unit for acquiring personal information for confirming a person;
a division unit for dividing the personal information; and
a storage control unit for storing dividedpersonal information, which is the personal information divided into a plurality thereof by the division unit, in at least two storage units among a storage unit equipped in the register, the portable storage media and a storage unit equipped in the server apparatus.

19. In a collator system comprising a client apparatus capable of reading out of a portable storage media, and a server apparatus connected with the client apparatus by way of a network, wherein the client apparatus comprises a division and combination unit for performing the first division of personal information for confirming a person, performing the second division of a plurality of the divided personal information, respectively, and combining the divided personal information obtained by the second division arbitrarily into a plurality of groups;
a storage control unit for storing a plurality of divided and combined personal information, which is the information combined by the division and combination unit, in at least two storage units among a storage unit equipped in the client apparatus, the portable storage media and a storage unit equipped in the server apparatus;
an acquisition unit for acquiring personal information of a confirmation subject which is personal information belonging to the confirmation subject;
an acquisition and generation unit for acquiring a predefined item of divided and combined personal information from the plurality of storage units and generating a predefined item of the divided personal information by using the divided and combined personal information; and
a collation unit for collating the personal information of a confirmation subject acquired by the acquisition unit with the divided personal information acquired by the acquisition and generation unit and collating in the next stage by using different divided personal information from the divided personal information acquired by the acquisition and generation unit based on the collation result.

20. In a collator system comprising a collator capable of reading out of a portable storage media, and a server apparatus connected with the collator by way of a network;
wherein the collator comprises:
at least two storage units among a storage unit equipped in the collator, the storage media and a storage unit equipped in the server apparatus for divisionally storing personal information for confirming a person;
an acquisition unit for acquiring personal information of a confirmation subject which is personal information belonging to the confirmation subject;
a generation unit for acquiring a predefined divided personal information from the plurality of storage units, and generating personal information for a first collation, which is personal information for collation, by combining the acquired divided personal information; and
a collation unit for collating personal information of a confirmation subject acquired by the acquisition unit with the personal information for collation, judging whether or not the next stage of collation will be performed based on the collation result and collating in the next stage by using a second personal information for collation being generated by the generation unit, if the judgment calls for the next stage of collation.

21. In a register system comprising a register capable of reading out of a portable storage media, and a server apparatus connected with the register by way of a network, wherein the register comprises a division and combination unit for performing the first division of personal information for confirming a person, performing the second division of a plurality of the divided personal information, respectively, and combining the divided personal information obtained by the second division arbitrarily into a plurality of groups; and
a storage control unit for storing a plurality of divided and combined personal information, which is the information combined by the division and combination unit, in at least two storage units among a storage unit equipped in the register, the portable storage media and a storage unit equipped in the server apparatus.
